Europäisches Patentamt

European Patent Office

Office européen des brevets

(11) Publication number : **0 486 206 A1**

# (12) EUROPEAN PATENT APPLICATION

(21) Application number : **91310255.4**

(22) Date of filing : **06.11.91**

(51) Int. Cl.$^5$ : **G02B 6/25**

(30) Priority : **16.11.90 US 614786**

(43) Date of publication of application :
**20.05.92 Bulletin 92/21**

(84) Designated Contracting States :
**DE GB**

(71) Applicant : **AMERICAN TELEPHONE AND TELEGRAPH COMPANY**
**550 Madison Avenue**
**New York, NY 10022 (US)**

(72) Inventor : **Angel, Eric Christopher**
**805 Mountain Avenue**
**Middlesex, New Jersey 08846 (US)**
Inventor : **Blyler, Lee Landis, Jr.**
**55 Kensington Road**
**Basking Ridge, New Jersey 07920 (US)**
Inventor : **Lee, Kenneth Yong-Kyung**
**21 Yellowbrook Road**
**Marlboro, New Jersey 07746 (US)**

(74) Representative : **Johnston, Kenneth Graham et al**
**AT&T (UK) LTD. AT&T Intellectual Property Division 5 Mornington Road**
**Woodford Green Essex, IG8 OTU (GB)**

(54) Termination of optical fibers.

(57) Disclosed is a method of terminating plastic optical fibers (10). The fiber is first cut by a blade, preferably at an elevated temperature. The fiber end (13) is then pressed against a smooth, heated surface (14) to reduce irregularities and improve coupling efficiency.

FIG. 2

## Background of the Invention

This invention relates to terminating plastic optical fiber.

The need for plastic optical fiber is presently increasing at a significant rate because of the low cost of such fibers compared to glass fibers. Substantial use is expected in such short range applications as Local Area Networks (LANs), automotive control and dashboard displays, and laptop computers.

One of the problems in using plastic fiber is how to produce a low loss termination on the fibers which does not defeat the major advantage of this technology, i.e., low cost. Usually, after a fiber is cut, it is held in a fixture, and the end is polished by moving it along an abrasive surface. This polishing reduces transmission loss when the fiber is later coupled to a device or another fiber (see, e.g., Miller, Optical Fiber Splices and Connectors (1986) p. 262). In some cases, the end of the fiber is heat molded around the optical device (see U.S. Patent 4,433,898) or molded to fill in a flare in a fiber ferrule (see U.S. Patent 4,510,005). While present polishing techniques may produce appropriately low losses, labor costs tend to be high since special fixtures and handling are usually required.

## Summary of the Invention

The invention is a method of terminating an optical fiber. The fiber is cut to produce a terminal fiber end. The end is then pressed against a smooth, heated, inert surface to reduce irregularities in the fiber end without significantly altering the geometry of the fiber end.

## Brief Description of the Drawing

In the drawing:
FIG. 1 is a schematic side view of an optical fiber during a first stage of fabrication in accordance with an embodiment of the invention;
FIG. 2 is a schematic side view of an optical fiber during a later stage of fabrication in accordance with the same embodiment; and
FIG. 3 is a cross-sectional view of an optical fiber during a later stage of fabrication in accordance with the same embodiment.

It will be appreciated that for the purposes of illustration, these figures are not necessarily drawn to scale.

## Detailed Description

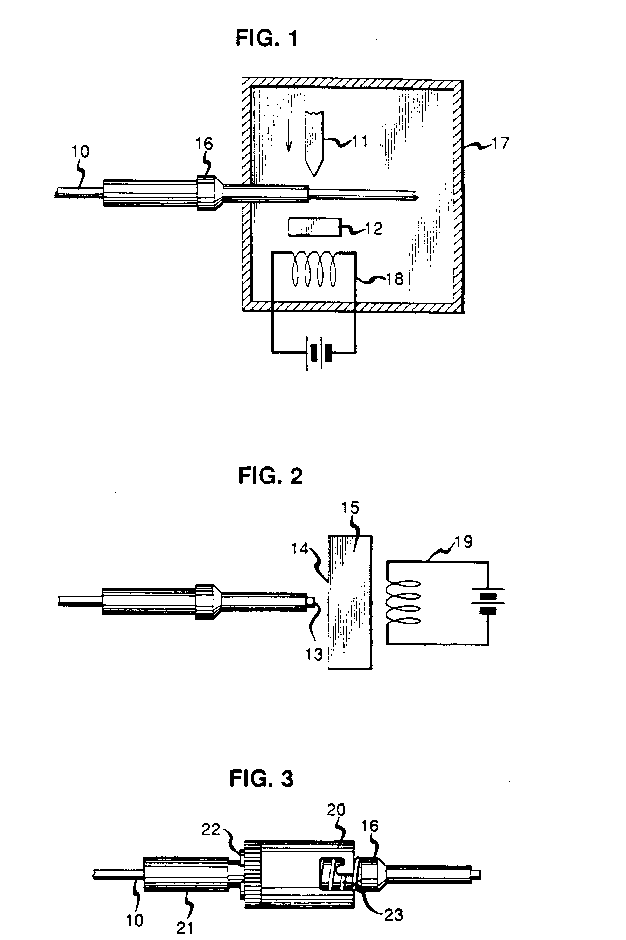

FIGS. 1-3 show various stages of terminating an optical fiber in accordance with an embodiment of the invention. The fiber, 10, is a typical plastic fiber including a core, a cladding surrounding the core, and a protective jacket around the cladding. The fiber is typically approximately 2.2 mm in diameter including the protective jacket and is usually made of a poly(methyl methacrylate) core, a fluorinated acrylic polymer cladding, and a polyethylene jacket. Plastic fibers utilizing different polymers are also available commercially.

In order to form a termination of the fiber, 10, an initial cut is made by any standard means, and the fiber is inserted into a standard ferrule 16. A final cut is made in accordance with the embodiment of FIG. 1. In this example, a blade, 11, is utilized in combination with a cutting surface provided by substrate 12, within a housing 17.

Preferably, the cutting is done at an elevated temperature to lower transmission losses. In one example, both the fiber and the blade were immersed in a liquid bath (not shown) which was maintained at approximately 80°C. In actual commercial practice, as shown in FIG. 1, it may be preferable to heat the enclosure formed by the housing utilizing a resistive heater, 18, rather than a bath. The blade, substrate, housing, and heater can all be part of a single tool such as that used for stripping wire in U.S. Patent 4,271,729. A preferred temperature range for achieving low losses is 75-85°C.

Cutting of the fiber produces a fiber end (13 of FIG. 2) which extends approximately 100μm beyond the ferrule 16 and can be terminated. However, it has been found that losses are further reduced by an additional treatment of the fiber end. This treatment involves placing the fiber end into direct contact with a smooth, inert, heated surface. In this example, the surface was a major surface, 14, of a glass plate, 15, which was heated by means of a resistive heater 19. The temperature of the surface was approximately 100°C and the fiber end was held in contact with the surface for approximately 5 seconds. By thus "ironing" the fiber end, losses were reduced from an average of approximately 3.22 dB for fibers which were cut with a blade at room temperatures and 2.27 dB for fibers cut at elevated temperatures to approximately 1.43 dB for fibers cut at an elevated temperature and then "ironed".

The objective of this step is to soften the fiber end in order to change the surface texture and thereby reduce irregularities. However, gross alterations of the fiber geometry should be avoided, otherwise light beams through the fiber end will be distorted. Thus, a preferred temperature range for a poly(methyl methacrylate) core fiber is 97-103°C. In the case of other core materials, the temperature of the plate surface should be approximately equal to the glass transition (softening) temperature of the material (within ±3 degrees). Typically, the fiber end will be in contact with the surface for a period of 5-8 sec, to allow the end to soften without significantly altering the geometry of the fiber.

It will also be noted that the fiber end can be placed in contact with the plate surface 14 without any further movement of the end along that surface. As compared with typically polishing techniques, therefore, no special fixtures are required to prevent undue bending of the fiber. This same benefit will accrue even if some movement is effected since the surface is smooth.

Subsequent to the ironing of the fiber end, the fiber can then be terminated by mounting thereon any standard optical connector which will couple the fiber to another fiber or an optical component, such as a laser, light emitting diode, or photodetector. FIG. 3 illustrates one such connector wherein a barrel 21 is provided over the ferrule 16 along with a spring 23. A sleeve 20 is mounted over the barrel and ferrule. The sleeve and spring are held in place by a stop member 22 formed around the barrel. The sleeve is capable of latching onto a connector element (not shown) when the ferrule 16 is inserted therein (see, e.g., U.S. Patent 4,738,508).

Various modifications will become apparent to those skilled in the art. All such variations which basically rely on the teachings through which the invention has advanced the art are properly considered within the scope of the invention.

**Claims**

1. A method of terminating an optical fiber (10) comprising the steps of: cutting the optical fiber to produce a terminal fiber end (13); and
    CHARACTERIZED BY
    pressing the end against a smooth heated surface (14) to reduce irregularities in the fiber end without significantly altering the geometry of the fiber end.

2. The method according to claim 1 wherein the optical fiber is made of a material comprising plastic.

3. The method according to claim 1 further comprising mounting an optical connector (20-23) to said fiber end.

4. The method according to claim 2 wherein the heated surface is at a temperature in the range 97-103°C.

5. The method according to claim 1 wherein the heated surface comprises glass.

6. The method according to claim 1 wherein the optical fiber is cut at a temperature in the range 75-85°C.

7. The method according to claim 1 wherein the fiber end is pressed against the surface without significant movement of said end against said surface.

8. The method according to claim 1 wherein the fiber end is pressed against said surface for a period within the range 5-8 sec.

9. The method according to claim 1 wherein the fiber includes a plastic core and the heated surface is at a temperature approximately equal to the glass transition temperature of the core.

## FIG. 1

## FIG. 2

## FIG. 3

EP 0 486 206 A1

<table>
<tr><td colspan="2">**European Patent Office**</td><td>**EUROPEAN SEARCH REPORT**</td><td>**Application Number**<br>EP 91 31 0255</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN<br>vol. 10, no. 140 (P-458)(2197) 23 May 1986<br>& JP-A-60 260 904 ( MITSUBISHI RAYON ) 24 December 1985<br>* abstract * | 1,2 | G02B6/25 |
| X | PATENT ABSTRACTS OF JAPAN<br>vol. 13, no. 341 (P-907)(3689) 31 July 1989<br>& JP-A-01 099 005 ( MITSUBISHI RAYON ) 17 April 1989<br>* abstract * | 1,7 | |
| X | PATENT ABSTRACTS OF JAPAN<br>vol. 7, no. 224 (P-227)(1369) 5 October 1983<br>& JP-A-58 115 404 ( MATSUSHITA ) 9 July 1983<br>* abstract * | 1 | |
| A | PATENT ABSTRACTS OF JAPAN<br>vol. 11, no. 58 (P-550)(2505) 21 February 1987<br>& JP-A-61 223 705 ( MITSUBISHI RAYON ) 4 October 1986<br>* abstract * | 1-3,8 | |
| A | PATENT ABSTRACTS OF JAPAN<br>vol. 14, no. 406 (C-754)4 September 1990<br>& JP-A-02 153 832 (HISANKABUTSU GLASS) 13 June 1990 | 5 | **TECHNICAL FIELDS SEARCHED (Int. Cl.5)**<br><br>G02B |
| A | PATENT ABSTRACTS OF JAPAN<br>vol. 13, no. 460 (P-946)18 October 1989<br>& JP-A-01 179 103 ( NTT ) 17 July 1989<br>* abstract * | 6 | |

The present search report has been drawn up for all claims

| Place of search | Date of completion of the search | Examiner |
|---|---|---|
| BERLIN | 30 JANUARY 1992 | HYLLA W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)